**Europäisches Patentamt**

**European Patent Office**

**Office européen des brevets**

(11) Veröffentlichungsnummer: **0 054 013**
**B1**

(12) **EUROPÄISCHE PATENTSCHRIFT**

(45) Veröffentlichungstag der Patentschrift:
**27.12.84**

(51) Int. Cl.³: **B 22 D 11/126,** B 23 K 7/10

(21) Anmeldenummer: **81890161.3**

(22) Anmeldetag: **06.10.81**

(54) **Stahlbrammenstranggiessanlage.**

(30) Priorität: **10.12.80 AT 5993/80**

(43) Veröffentlichungstag der Anmeldung:
**16.06.82 Patentblatt 82/24**

(45) Bekanntmachung des Hinweises auf die Patenterteilung:
**27.12.84 Patentblatt 84/52**

(84) Benannte Vertragsstaaten:
**BE CH DE FR GB IT LI LU NL SE**

(56) Entgegenhaltungen:
**AT - B - 330 970**
**DE - A - 2 554 358**
**DE - B - 2 502 615**
**DE - B - 2 935 029**
**FR - A - 2 370 546**

(73) Patentinhaber: **VOEST-ALPINE Aktiengesellschaft, Werksgelände, A-4010 Linz (AT)**

(72) Erfinder: **Der Erfinder hat auf seine Nennung verzichtet**

(74) Vertreter: **Wolfram, Gustav, Dipl.-Ing., Schwindgasse 7 P.O. Box 205, A-1041 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stahlbrammenstranggiessanlage gemäss dem Oberbegriff des Anspruches 1 (DE-B-2 935 029).

Um Beschädigungen der Stützrollen im Bereich des Brennschneidrollganges zu vermeiden, ist es bekannt, die Rollen während des Brennschneidens aus der den Strang stützenden Position abzusenken (DE-A-1 810 951, DE-B-2 408 855) bzw. (für Knüppelgiessanlagen) wegzuschwenken (DE-A-1 914 223, DE-A-2 116 911), so dass der Strang, wenn sich der Brennschneidstrahl oberhalb dieser Rolle befindet, an dieser Stelle ungestützt ist. Nachteilig ist hierbei die relativ grosse ungestützte Länge des Stranges.

Um eine allzu grosse ungestützte Länge des Stranges im Brennschneidrollgang zu vermeiden, ist es bekannt (DE-B-1 208 850), während des Brennschneidens Rollen synchron mit dem Strang mitzubewegen, wobei sich der Brennschneidstrahl immer zwischen zwei sich mit dem Strang mitbewegenden Rollen befindet. Diese Konstruktion hat den Nachteil, dass sie viele bewegliche Teile erfordert, deren Bewegung während des Brennschneidens notwendig ist. Aus der DE-A-2 550 161 ist es bekannt, Stützrollen eines Brennschneidrollganges an einem Wagen zu montieren, der mittels eines Antriebs in Stranglängsrichtung hin- und herbewegbar ist, so dass die Stützrollen bei Bewegung in einer der Richtungen durch den Brennschneidstrahl hindurchbewegt werden. Diese Konstruktion ist kompliziert, und es müssen ebenfalls Teile der Anlage während des Schneidvorganges bewegt werden. Durch das Hindurchbewegen einer Stützrolle durch den Brennschneidstrahl ist eine Beschädigung der Stützrolle möglich.

Bei einer Anlage der eingangs beschriebenen Art (DE-B-2 935 029) sind die scheibenförmigen Rollenkörperteile jeder Stützrolle auf einer gemeinsamen Achse vorgesehen. Der Brennschneidstrahl wird zwischen den Rollenkörperteilen hindurchbewegt. Diese bekannten Rollen werden nicht abgesenkt, mit solchen scheibenförmigen Rollenkörperteilen ist es jedoch nicht möglich, den Strang mit der erforderlichen Stabilität abzustützen, und weiters ist es nachteilig, dass der Brennschneidstrahl bei jedem Schneidvorgang die Achse der Rolle kreuzt, wodurch die Rollen binnen kurzer Zeit stark in Mitleidenschaft gezogen werden.

Die Erfindung bezweckt die Vermeidung dieser Nachteile und Schwierigkeiten und stellt sich die Aufgabe, eine Anlage der eingangs beschriebenen Art zu schaffen, bei der eine Beeinflussung der Rollenachsen durch den Brennschneidstrahl ausgeschlossen ist, wobei zu grosse Rollenabstände während des Brennschneidens vermieden werden und während des Brennschneidens bewegbare Teile nicht erforderlich sind. Weiters soll eine sichere Abstützung des Stranges im Brennschneidrollgang gewährleistet sein.

Diese Aufgabe wird erfindungsgemäss dadurch gelöst, dass die Rollenkörperteile voneinander unabhängig als eigenständige Bauteile ausgebildet sind, wobei die Rollenkörperteile einer Stützrolle jeweils zu den Rollenkörperteilen einer benachbarten Stützrolle unter Freilassung des Brennschneidstrahlweges versetzbar sind.

Gemäss einer bevorzugten Ausführungsform ist ein Rollenkörperteil einer Stützrolle absenkbar, insbesondere abschwenkbar.

Vorteilhaft liegen die Rollenkörperteile jeder Stützrolle voneinander in einem den Brennschneidstrahlweg freilassenden Abstand und ist jede der Stützrollen quer zur Stranglängsachse bewegbar, wobei zweckmässig die Rollenkörperteile jeder Stützrolle auf einem quer zur Stranglängsrichtung verschiebbaren Wagen gelagert sind.

Gemäss einer weiteren zweckmässigen Ausführungsform ist jeder Rollenkörperteil einer Stützrolle für sich, d.h. unabhängig von dem oder den anderen Rollenkörperteilen quer zur Stranglängsachse bewegbar.

Eine andere vorteilhafte Ausführungsform ist dadurch gekennzeichnet, dass Rollenkörperteile der Stützrollen in Längsrichtung des Brennschneidrollganges bewegbar sind, wobei vorteilhaft Rollenkörperteile von einzelnen benachbarten Stützrollen an einem in Längsrichtung des Brennschneidrollganges verschiebbaren Wagen gelagert sind.

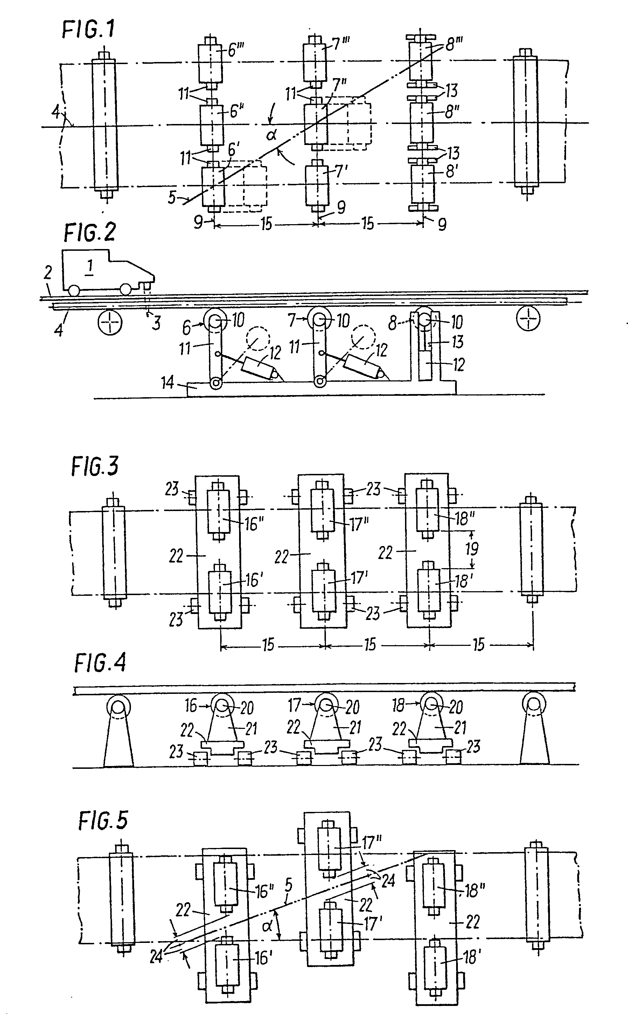

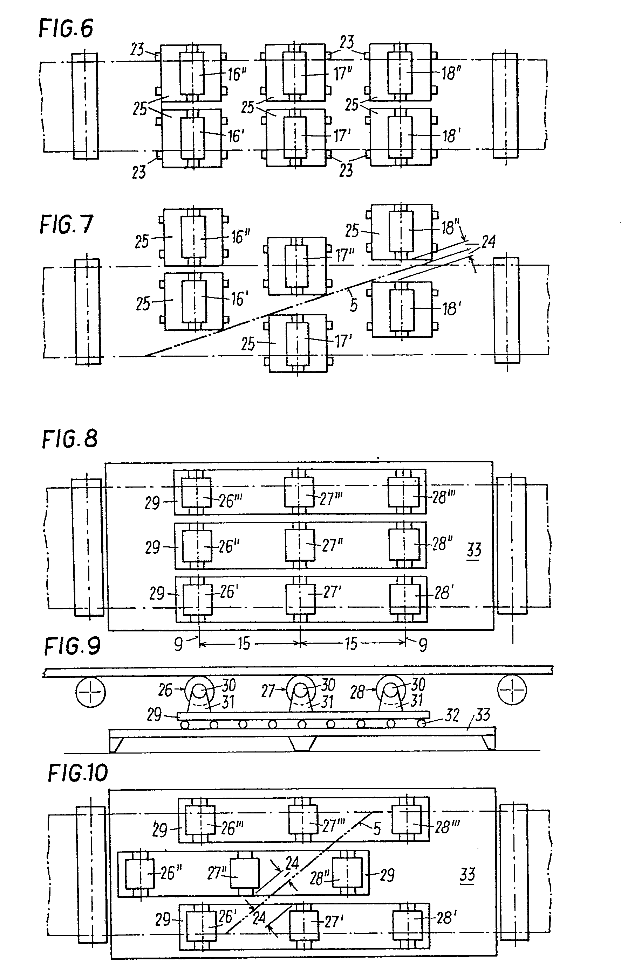

Die Erfindung ist nachfolgend anhand der schematischen Zeichnung an mehreren Ausführungsbeispielen näher erläutert, wobei Fig. 1 eine Draufsicht von oben auf einen Brennschneidrollgang und Fig. 2 eine Seitenansicht dieses Brennschneidrollganges zeigen. Die Fig. 3 bis 5 veranschaulichen eine andere Ausführungsform, wobei Fig. 3 ebenfalls eine Draufsicht, Fig. 4 eine Seitenansicht und Fig. 5 wieder eine Draufsicht, jedoch während des Brennschneidens, zeigen. In den Fig. 6 und 7 ist eine weitere Variante in zu den Fig. 3 und 5 analogen Darstellungen gezeigt. Die Fig. 8 bis 10 zeigen eine Ausführungsform ebenfalls in Draufsicht (Fig. 8), in Seitenansicht (Fig. 9) sowie in Draufsicht während des Brennschneidens (Fig. 10).

Entlang eines Brennschneidrollganges ist eine schematisch dargestellte Brennschneidmaschine 1 entlang von Schienen 2 synchron mit dem Strang mitbewegbar. Der Brennschneidstrahl 3 der Brennschneidmaschine bewegt sich während des Schneidens quer zur Längsachse 4 des Brennschneidrollganges. Gegenüber dem ortsfesten Betrachter der Anlage vollführt der Brennschneidstrahl eine Bewegung entlang der in Fig. 1 eingezeichneten Linie 5 schräg zur Längsachse. Der Neigungswinkel $\alpha$ dieser Linie 5 gegenüber der Längsachse 4 bestimmt sich aus dem Verhältnis Strangausziehgeschwindigkeit zu Vorschubgeschwindigkeit des Brennschneidstrahles quer zur Längsachse.

Die Stützrollen 6, 7 und 8 des Brennschneidrollganges sind quer zu ihrer Achse in einzelne Rollenkörperteile 6', 6'', 6''', 7', 7'', 7''' und 8', 8'', 8''' geteilt, die mit ihren jeweiligen Achsen 9 fluchten. Jeder der Rollenkörperteile ist mittels ihm eigener Lager 10 gegen eine Stützkonstruktion abgestützt, und zwar entweder mittels ortsfest angelenkter Schwenkhebel 11, die um eine Achse quer zur Stranglängsachse unterhalb der Rolle gelagert sind und mittels Druckmittelzylinder 12 bewegbar sind, oder mittels sich im wesentlichen vertikal erstreckender Führungen 13 des ortsfesten Stützgerüstes 14, welches (ebenso wie die Schienen 2) der Einfachheit halber in Fig. 1 nicht eingezeichnet ist. Sobald die Linie 5, entlang der der Brennschneidstrahl gegenüber dem ortsfesten Brennschneidrollgang bewegt wird, festliegt (was in der Regel durch Einstellung einer bestimmten Strangausziehgeschwindigkeit erfolgt), werden diejenigen Rollenkörperteile 6′, 7′′, 8′′′, die von dieser Linie 5 im Grundriss (Fig. 1) gekreuzt werden, aus dem Niveau des Brennschneidrollganges abgesenkt, was durch Verschwenken der Schwenkhebel 11 oder durch Verschieben der Lager 10 der Rollenkörperteile 6′, 7′′, 8′′′ entlang der Führungen 13 geschieht. Die in ihrer Position unverändert gelassenen restlichen Rollenkörperteile stützen weiterhin den Strang, so dass dieser keine grösseren ungestützten Längen aufweist als der Rollenabstand 15 der einzelnen Stützrollen 6, 7 und 8. Die den Strang stützenden Rollenkörperteile 6′′, 6′′′ einer Rolle 6 sind während des Brennschneidens unter Freilassung des Brennschneidstrahlweges zu den strangstützenden Rollenkörperteilen 7′, 7′′′ der benachbarten Rolle 7 versetzt angeordnet.

Gemäss der in den Fig. 3 bis 5 dargestellten Ausführungsform (die Brennschneidmaschine ist hier nicht dargestellt) sind ebenfalls die im Brennschneidstrahlbereich liegenden Stützrollen 16, 17, 18 in Rollenkörperteile 16′, 16′′, 17′, 17′′, 18′, 18′′ geteilt, wobei die Rollenkörperteile jeder Rolle in einem Abstand 19 voneinander angeordnet sind. Jeder der Rollenkörperteile ist für sich mittels Lager 20 und Lagerböcke 21 an einem quer zur Stranglängsrichtung verschiebbaren Wagen 22 abgestützt. Diese Wagen können beispielsweise, wie die Fig. 3 bis 5 zeigen, mittels Rollen 23 gegenüber dem Fundament verschiebbar sein. Wie aus Fig. 5 ersichtlich ist, werden nach Festliegen des vom Brennschneidstrahl zurückgelegten Weges (Linie 5) die von dieser Linie 5 gekreuzten Stützrollen so weit verschoben, bis die betroffenen Rollenkörperteile in einem gewissen Sicherheitsabstand 24 entweder auf der einen oder auf der anderen Seite der Linie 5 liegen. Wie aus Fig. 5 ersichtlich ist, ist hier ebenfalls der Strang während des Brennschneidens an jeder Stützrolle 16, 17, 18 abgestützt, wobei jedoch die den Strang stützenden Rollenkörperteile 16′, 16′′ einer Stützrolle 16 gegenüber den strangstützenden Rollenkörperteilen 17′, 17′′ einer benachbarten Stützrolle 17 versetzt sind.

Eine ähnliche Variante ist in den Fig. 6 und 7 gezeigt, hier ist jedoch jeder der Rollenkörperteile 16′, 16′′ ... usw. jeder Stützrolle 16, 17, 18 für sich an einem eigenen, quer zur Stranglängsrichtung mittels Rollen 23 verschiebbaren Wagen 25 gelagert. Wie aus Fig. 7 ersichtlich ist, lassen sich die Wagen nach Festliegen des vom Brennschneidstrahl entlang der Linie 5 zurückgelegten Weges neben dieser Linie 5 derart gruppieren, dass der Strang zwar von jeder der Stützrollen 16, 17, 18 gestützt ist, jedoch ein gewisser Sicherheitsabstand 24 vom Weg des Brennschneidstrahles eingehalten wird.

Bei der in den Fig. 8 bis 10 dargestellten Ausführungsform sind die im Brennschneidstrahlbereich liegenden Stützrollen 26, 27, 28 ebenfalls quer zu ihrer Achse 9 in einzelne Rollenkörperteile 26′, 26′′, 26′′′, 27′ ... usw. geteilt, wobei die Rollenkörperteile in Längsrichtung 4 des Brennschneidrollganges bewegbar sind. Zu diesem Zweck sind die in Längsrichtung des Brennschneidrollganges hintereinanderliegenden Rollenkörperteile 26′, 27′, 28′ bzw. 26′′, 27′′, 28′′ bzw. 26′′′, 27′′′, 28′′′ der Stützrollen an jeweils eigenen Wagen 29 mittels Lager 30 und Lagerböcke 31 gelagert. Jeder dieser Wagen 29 ist mittels Räder 32 auf einer am Fundament abgestützten Fahrbahn 33 in Längsrichtung 4 des Brennschneidrollganges verfahrbar, und zwar unabhängig von den anderen Wagen. In Fig. 10 ist gezeigt, wie die Wagen 29 verschoben werden müssen, um den entlang der Linie 5 verlaufenden Weg des Brennschneidstrahles freizuhalten. Die Wagen sind so weiti verschoben, dass nicht nur der Weg freigehalten ist, sondern dass die Rollenkörperteile auch mit einem gewissen Sicherheitsabstand 24 von diesem Weg entfernt liegen. Auch hier sind nach Verfahren der Wagen 29 gemäss Fig. 10 die strangstützenden Rollenkörperteile einer Stützrolle jeweils zu den strangstützenden Rollenkörperteilen einer benachbarten Stützrolle unter Freilassung des Brennschneidstrahlweges gegeneinander versetzt, wobei die Versetzungsrichtung in Längsrichtung 4 des Brennschneidrollganges liegt.

**Patentansprüche**

1. Stahlbrammenstranggiessanlage mit einem Stützrollen (6, 7, 8; 16, 17, 18; 26, 27, 28) aufweisenden Brennschneidrollgang, entlang dem eine mindestens einen Brennschneidstrahl (3) aufweisende Brennschneidmaschine (1) synchron mit dem Strang mitbewegbar ist, wobei der (die) Brennschneidstrahl(en) quer zur Längsachse (4) des Brennschneidrollganges bewegbar ist (sind) und die Stützrollen (6, 7, 8; 16, 17, 18; 26, 27, 28) den Strang abstützende Rollenkörperteile aufweisen, dadurch gekennzeichnet, dass die Rollenkörperteile (6′ - 28′′′) voneinander unabhängig als eigenständige Bauteile ausgebildet sind, wobei die Rollenkörperteile (6′ - 28′′′) einer Stützrolle jeweils zu den Rollenkörperteilen (6′ - 28′′′) einer benachbarten Stützrolle unter Freilassung des Brennschneidstrahlweges (5) versetzbar sind.

2. Anlage nach Anspruch 1, dadurch gekennzeichnet, dass ein Rollenkörperteil (6′, 7′′, 8′′′) einer Stützrolle absenkbar, insbesondere abschwenkbar ist (Fig. 1, 2).

3. Anlage nach Anspruch 1, dadurch gekennzeichnet, dass die Rollenkörperteile (16′, 16′′, 17′, 17′′, 18′, 18′′) jeder Stützrolle (16, 17, 18) voneinander in einem den Brennschneidstrahlweg (5) freilassenden Abstand (19) liegen und jede der Stützrollen quer zur Stranglängsachse (4) bewegbar ist (Fig. 3 bis 5).

4. Anlage nach Anspruch 3, dadurch gekennzeichnet, dass die Rollenkörperteile jeder Stützrolle auf einem quer zur Stranglängsrichtung verschiebbaren Wagen (22) gelagert sind (Fig. 3 bis 5).

5. Anlage nach Anspruch 1, dadurch gekennzeichnet, dass jeder Rollenkörperteil (16′, 16′′, 17′, 17′′, 18′, 18′′) einer Stützrolle (16, 17, 18) für sich, d.h. unabhängig von dem oder den anderen Rollenkörperteilen quer zur Stranglängsachse (4) bewegbar ist (Fig. 6, 7).

6. Anlage nach Anspruch 1, dadurch gekennzeichnet, dass Rollenkörperteile (26' ... 28''') der Stützrollen (26, 27, 28) in Längsrichtung (4) des Brennschneidrollganges bewegbar sind (Fig. 8 bis 10).

7. Anlage nach Anspruch 6, dadurch gekennzeichnet, dass Rollenkörperteile (26' ... 28''') von einzelnen benachbarten Stützrollen (26, 27, 28) an einem in Längsrichtung (4) des Brennschneidrollganges verschiebbaren Wagen (29) gelagert sind (Fig. 8 bis 10).

## Claims

1. A continuous casting plant for steel slabs comprising a flame cutting roller table including support rollers (6, 7, 8; 16, 17, 18; 26, 27, 28), along which a flame cutting machine (1) providing at least one flame cutting jet (3) is movable synchronously with the stand, the flame cutting jet(s) (3) being moveable transversely to the longitudinal axis (4) of the flame cutting roller table and the support rollers (6, 7, 8; 16, 17, 18; 26, 27, 28) including roller body parts supporting the strand, characterised in that the roller body parts (6' to 28''') are designed independent of one another as separate structural parts, the roller body parts (6' to 28''') of one support roller each being displaceable to the roller body parts (6' to 28''') of a neighboring support roller by leaving free the path (5) of the flame cutting jet.

2. A plant according to claim 1, characterised in that a roller body part (6', 7'', 8''') of a support roller is lowerable, in particular downwardly pivotable (figs. 1, 2).

3. A plant according to claim 1, characterised in that the roller body parts (16', 16'', 17', 17'', 18', 18'') of each support roller (16, 17, 18) are located at a distance (19) from one another by leaving free the path (5) of the flame cutting jet and each support roller is movable transversely to the longitudinal axis (4) of the strand (figs. 3 to 5).

.4 A plant according to claim 3, characterised in that the roller body parts of each support roller are mounted on a car (22) displaceable transversely to the longitudinal axis of the strand (figs. 3 to 5).

5. A plant according to claim 1, characterised in that each roller body part (16', 16'', 17', 17'', 18', 18'') of a support roller (16, 17, 18) is movable transversely to the longitudinal axis (4) of the strand separately, i.e. independently of the remaining roller body part(s) (figs. 6, 7).

6. A plant according to claim 1, characterised in that roller body parts (26' ... 28''') of the support rollers (26, 27, 28) are movable in the longitudinal direction (4) of the flame cutting roller table (figs. 8 to 10).

7. A plant according to claim 6, characterised in that roller body parts (26' ... 28''') of individual neighbouring support rollers (26, 27,28) are mounted on a car (29) displaceable in the longitudinal direction (4) of the flame cutting roller table (figs. 8 to 10).

## Revendications

1. Installation de coulée continue de brames d'acier comprenant un train de rouleaux de coupe au chalumeau présentant des rouleaux supports (6, 7, 8; 16, 17, 18; 26, 27, 28) le long duquel une machine (1) de coupe au chalumeau qui comprend au moins un jet de coupe au chalumeau (3) peut se déplacer en synchronisme avec la barre, le (les) jet(s) de coupe au chalumeau (3) pouvant se déplacer transversalement à l'axe longitudinal (4) du train de rouleaux de coupe au chalumeau et les rouleaux supports (6, 7, 8; 16, 17, 18; 26, 27, 28) présentant des éléments de corps de rouleau qui supportent la barre, caractérisée en ce que les éléments de corps de rouleau (6' - 28''') sont constitués indépendamment les uns des autres, par des composants autonomes, les éléments de corps de rouleau (6' - 28''') d'un rouleau support pouvant être déplacés par rapport aux éléments de corps de rouleau (6' - 28''') d'un rouleau support voisin en dégageant ainsi le trajet (5) du jet de coupe au chalumeau.

2. Installation selon la revendication 1, caractérisée en ce qu'un élément de corps de rouleau (6', 7'', 8''') d'un rouleau support peut être abaissé, notamment rabattu.

3. Installation selon la revendication 1, caractérisée en ce que les éléments de corps de rouleau (16', 16'', 17', 17'', 18', 18'') de chaque rouleau support (16, 17, 18) se trouvent à une distance l'un de l'autre qui dégage le trajet (5) du jet de coupe au chalumeau et que chacun des rouleaux supports peut être déplacé transversalement à l'axe longitudinal (4) de la barre.

4. Installation selon la revendication 3, caractérisée en ce que les éléments de corps de rouleau de chaque rouleau support sont tourillonnés sur un chariot (22) mobile en translation transversalement à la direction longitudinale de la barre.

5. Installation selon la revendication 1, caractérisée en ce que chaque élément de corps de rouleau (16', 16'', 17', 17'', 18', 18'') d'un rouleau support (16, 17, 18) peut se déplacer transversalement à l'axe longitudinal (4) de la barre, isolément, c'est-à-dire indépendamment de l'autre ou des autres élément(s) de corps de rouleau.

6. Installation selon la revendication 1, caractérisée en ce que les éléments de corps de rouleau (26' ... 28''') des rouleaux supports (26, 27, 28) peuvent se déplacer dans la direction longitudinale (4) du train de rouleaux de la coupe au chalumeau.

7. Installation selon la revendication 6, caractérisée en ce que les éléments de corps de rouleau (26' ... 28''') de rouleaux supports voisins distincts (26, 27, 28) sont tourillonnés sur un chariot (29) pouvant se déplacer en translation dans la direction longitudinale (4) du train de rouleaux de la coupe au chalumeau.

FIG.1

FIG.2

FIG.3

FIG.4

FIG.5

**FIG.6**

**FIG. 7**

**FIG. 8**

**FIG. 9**

**FIG. 10**